# EUROPEAN PATENT APPLICATION

(11) **EP 1 704 777 A1**
(43) Date of publication of application: **27.09.2006**
(21) Application number: 05425169.9
(22) Date of filing: 23.03.2005
(51) Int. Cl.: A01K 63/00

(54) **Aquarium with lid**

(71) Applicant: Askoll Holding S.r.l., 36031 Povolaro di Dueville (Vicenza) (IT)
(72) Inventor: Marioni, Ellio, 36031 Dueville (Vicenza) (IT)
(74) Representative: Ferrari, Barbara

(57) **Abstract**

An aquarium of the type comprising a tank (12) with a mouth (12a) and a lid (14) wherein the lid (14) is movable around a side thereof (14d) between an opening position and a closing position of the mouth (12a) of the tank. In the closing position, the lid (14) is structurally independent from the tank and, in the movement towards the opening position, the side (14d) of the lid (14) has fulcrum on at least two points (P,P') of the tank (12). The aquarium also comprises stopping means (30) to keep the lid (14) in the opening position.

## Description

### Field of application

The present invention relates, in its most general aspect, to the aquarium field.

In its most particular aspect, the present invention relates to an aquarium comprising a tank with mouth and a lid, which is angularly movable around a side thereof between a closing position and an opening position of the tank mouth.

### Prior art

The need to perform periodic maintenance and cleaning operations of an aquarium tank is known in the field.

To this purpose, the aquarium is provided with an openable lid, which can be raised by a user in order to allow the tank inside to be accessed.

In known aquaria, the lid is fixed to a tank edge by means of hinges allowing a stable constraint and connection of the two elements to be obtained.

Generally, on the side turned towards the tank inside, the lid is provided with light sources positioned on corresponding supports. Light sources are generally connected to a power supply, also supported on the lid.

When the lid is raised for the tank maintenance, it is kept above the tank by means of related supporting elements, so that light sources can light up the tank inside favouring the maintenance operations to be performed.

Known aquaria, although responding to the scope, have the drawback that the lid, being constrained by the hinges, cannot be removed from the tank.

This drawback is particularly disadvantageous when it is necessary to perform the routine maintenance or cleaning of the light sources or related electric components, or simply when it is necessary to replace them.

This operation must be necessarily performed close to the aquarium tank, thus involving a high operating discomfort.

In order to overcome this inconvenience, an aquarium has been provided, wherein the lid removably rests on the tank upper edge, without being steadily fixed or constrained thereto.

This latter known aquarium allows the lid to be completely removed from the tank, thus making the light source maintenance and cleaning operations easier.

The removable lid also offers the advantage of avoiding the use of hinges or other components having a similar function, reducing production costs.

A removable lid has however the disadvantage that, once removed, it must be temporarily positioned on an occasional support, such as a table, the floor and the like. Nevertheless in this makeshift position, the lid is subject to easy fall and subsequent breaking.

Moreover, the lid shift causes an undesired moisture drip around the aquarium.

The technical problem underlying the present invention is thus to make an aquarium of the above-mentioned type, allowing the lid to be steadily positioned when the aquarium user must access the tank inside to perform maintenance operations or the like, without any risk of drips or breakings of the lid itself.

### Summary of the invention

This technical problem is solved by an aquarium comprising a tank with mouth and a lid wherein the lid is angularly movable around a side thereof between an opening position and a closing position of the tank mouth.

According to the invention, in the closing position, the lid is structurally independent from the tank and, when moving towards the opening position, the above lid side has fulcrum on at least two tank points. Stopping means to keep the lid in the opening position are also provided.

Further features and the advantages of the aquarium according to the invention will be apparent from the following description of an embodiment thereof given by way of indicative and non limiting example with reference to the attached drawings.

### Brief description of the drawings

Figure 1 is an axonometric view of an aquarium according to the invention.

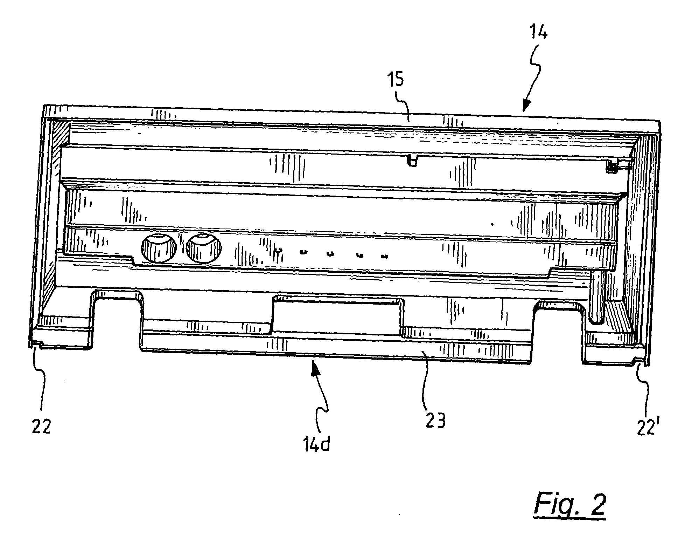

Figure 2 is a view from below of a lid for the aquarium of figure 1.
Figure 3 is a view of a stopping arm associated with the aquarium lid.
Figure 4 is an enlarged-scale view of a detail of the lid of figure 2 in the open position provided with a stopping arm.
Figure 4a is an enlarged-scale detail of a connection area between the stopping arm and the lid.
Figure 5 shows a detail of a connection area between the lid and the aquarium tank according to the invention in the closing position.
Figure 6 shows a detail of the connection area between the lid and the aquarium tank according to the invention during an angular movement.

### Detailed description

With reference to the attached drawings, an aquarium according to the present invention is generally indicated with the reference number 10.

The aquarium 10 comprises a tank 12, preferably of glass, with a mouth 12a for the water containment and a lid 14, preferably of plastic, positioned to close the tank mouth 12a.

The lid 14 is angularly movable around a side thereof 14d, i.e. in the case being shown the back side thereof, between an opening position and a closing position of the mouth 12a of the tank 12.

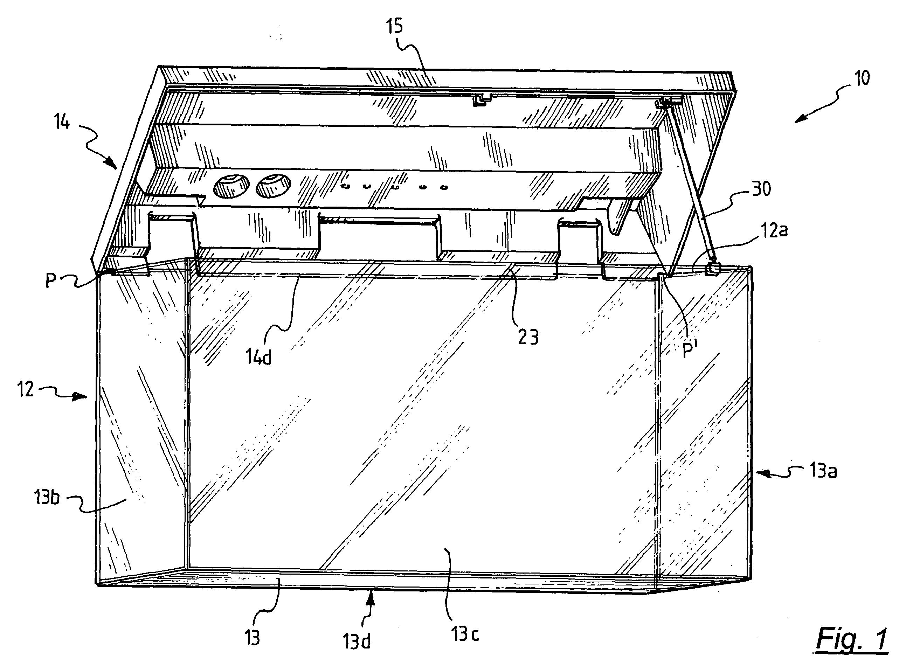

In the case of the solution being shown, the tank 12 comprises a rectangle-shaped bottom wall 13, and four side walls, i.e. two minor side walls being opposed to each other 13a, 13b respectively positioned on the right and on the left in figure 1 and two major walls 13c and 13d respectively positioned the one in the front and the other in the back in figure 1.

Without being a limitation of the Applicant's rights, the following description is made with reference to the position of the aquarium of figure 1. All space indications, such as right, left, front, back and the like must be thus considered, by simple way of example, with reference to the aquarium position shown in figure 1 for convenience of illustration only.

According to the present invention, the aquarium 10 is configured as follows: in the closing position, the lid 14 is structurally independent from the tank 12 while, during an angular movement towards the opening position, the back side 14d of the lid 14 has fulcrum on at least two points P, P' of the tank 12.

In other words, the aquarium 10 according to the invention is so shaped that the lid 14, when being in the closing position, is independent from the tank 12, i.e. it simply rests to close the mouth 12a so to be removed without having to remove any constraint.

During an angular movement, two points P, P' acting as a fulcrum connect the lid 14 to the tank 12 and they allow a stable, but simultaneously removable, joint of the lid 14 on the tank 12.

The angular movement of the lid 14 thus occurs around an axis X passing through the two fulcrum points P and P', also called fulcrum axis.

Preferably, the two points P, P' to pivot the lid on the tank 12 are positioned on opposed sides of the mouth 12a of the tank 12, i.e. on the right 13a and left 13b walls.

In particular, in the case of the solution being shown, in correspondence with the two points P, P', the lid 14 comprises a pair of notches 22, 22', or recesses, which are made on said back side 14d of the lid 14, i.e. the side around which the lid 14 is angularly moved.

In particular, the two notches 22, 22' are made in correspondence with the two opposed terminal ends of the back side 14d of the lid 14 near a corresponding edge.

In that position the two notches 22, 22' are aligned each respectively with the corresponding right 13a and left 13b side walls of the tank 12.

In this way, as it can be noticed in figures 1, 5 and 6, during an angular movement of the lid 14, each notch 22, 22' is intended to removably engage on the opposite side walls 13a, 13b of the mouth 12a of the tank 12.

In other words, by means of the notches 22, 22', in correspondence with the fulcrum points P and P' a straddling arrangement of the back side 14d of the lid 14 on the opposite sides of the tank 12 is obtained, thus allowing a stable angular movement with respect to the tank 12.

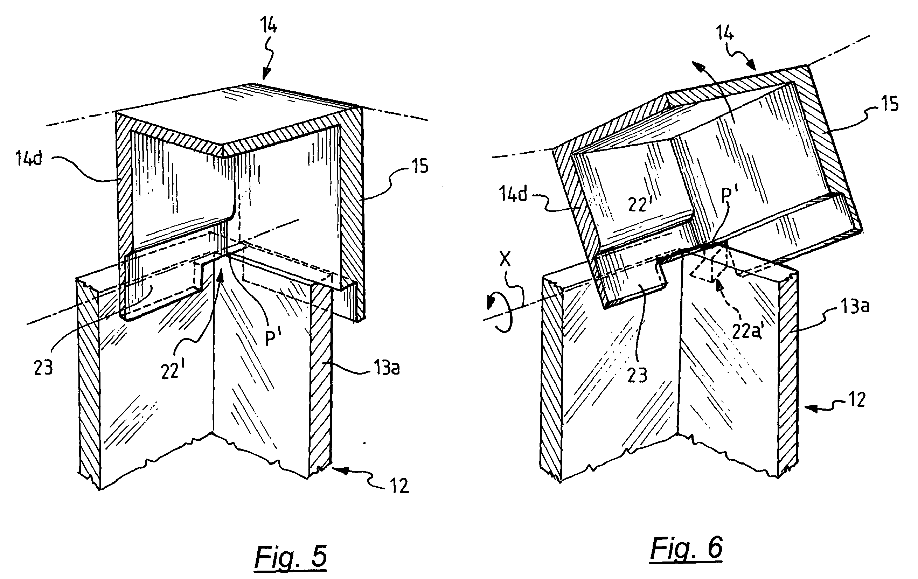

According to an alternative embodiment, two notches, one thereof being traced in dotted lines and indicated with the reference number 22a' in figures 5 and 6, are made on the opposed sides of the tank mouth 12a exactly in correspondence with points P and P'.

In this case the lid back side is substantially smooth and it removably engages in the notches 22a' of the tank 12 during the angular movement.

According to a further embodiment, the notches are made in correspondence with points P and P' both on the lid and on the tank opposite sides. Therefore, during an angular movement, the lid notches mutually engage in the tank notches, thus allowing a stable connection of the tank and of the lid during the angular movement.

As it can be recognised in figure 1, the lid 14 is of the box-like type and it is peripherally provided with an edge 15 turned towards the tank 12.

The edge 15, when the lid rests on the tank 12, surrounds the tank mouth 12a.

In the case being shown the above-mentioned notches 22, 22' are made just on the lid back edge 15.

Between the two notches 22, 22', the back side of the edge 15 has an intermediate portion 23 which, during the angular movement, is inside the mouth 12a of the tank 12.

Preferably, as it will better described hereafter, during the angular movement of the lid 14, also the portion 23 rests on the tank back wall 13d.

According to another feature of the invention, the aquarium 10 comprises stopping means to keep the lid 14 in a stable position when it is raised above the tank 12 in the opening position.

In the case of the solution being shown, the stopping means comprise an arm 30 which is associated with the lid 14 to support the lid 14 on the tank 12 when it is opened.

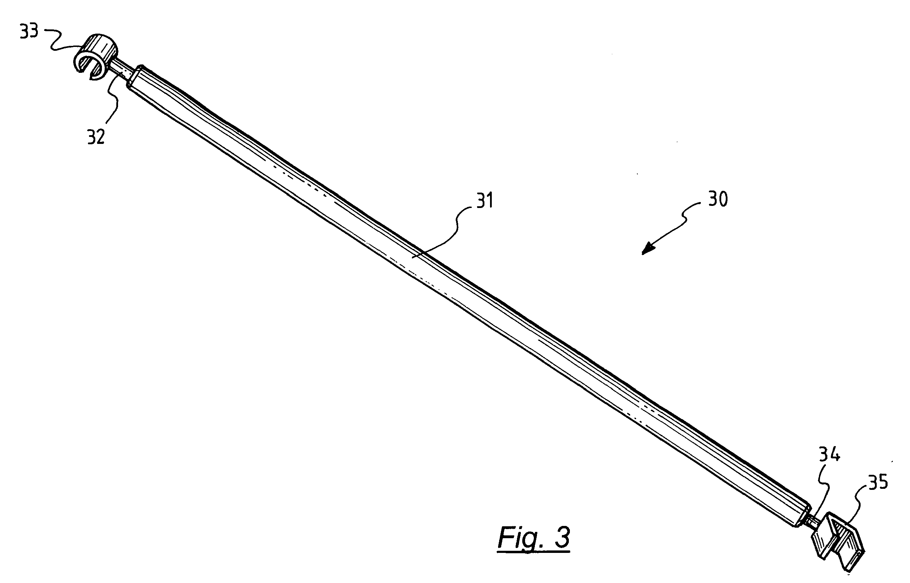

The arm 30 comprises a cylinder-shaped rod 31 (figure 3), which has a first end 32, i.e. the end being suitable for fixation to the lid 14, having the shape of an open ring 33.

A second end 34 of the rod 31, opposed to the first, has the shape of a fork 35.

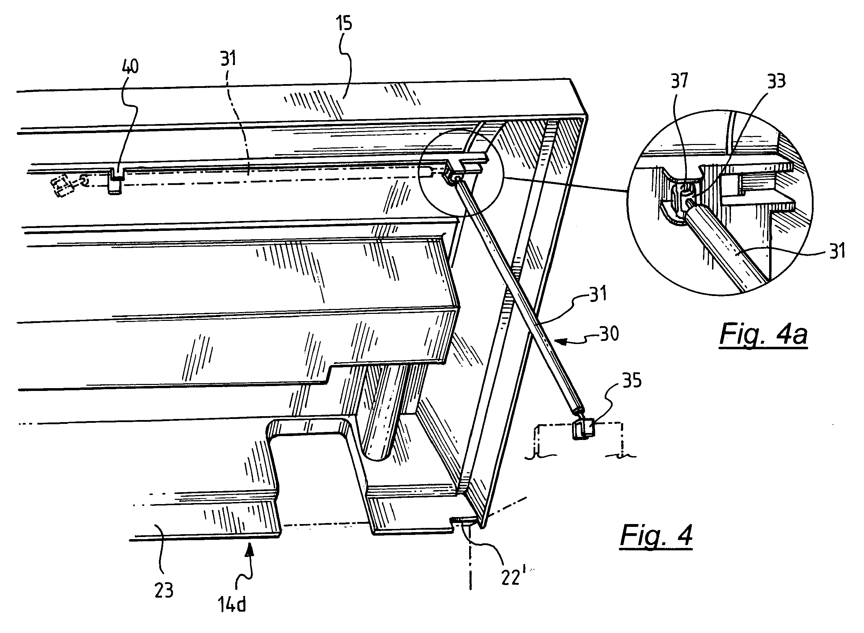

The open ring 33 is suitable to be hooked to a pin 37 made on the inner side of the lid 14. The fork-shaped end 35 is suitable for engagement on an edge of the mouth 12a of the tank 12 (figures 4 and 4a).

In the case being shown, the fork-shaped end 35 is intended to engage on the upper edge of the front side wall 13c opposed to the points P and P', in another solution it can engage the upper edge of the side wall 13a.

Preferably, also the arm 10 is structurally independent from the aquarium 10.

To this purpose, the open ring 33 is made of an at least partially elastic material allowing a simple hook/removal on and from the pin 37 as shown in figure 4.

The axis of the pin 37 is oriented so to allow the arm 30 to rotate between a first operating position, corresponding to the opening position of the tank 12, wherein the arm supports the lid 14, and a second rest position, corresponding to the closing position of the tank 12, wherein the arm 30 is closed foldaway on the inner side of the lid 14 (figure 4).

In order to keep the arm 30 in a stable position on the inner side of the lid 14, this latter comprises a support 40 being substantially U-shaped, wherein the cylindrical rod 31 is suitable to be inserted by pressure.

Preferably, the support 40 is made of an at least partially elastic material to allow the rod 31 to be easily inserted by tripping.

The above-described aquarium 10 is opened as follows.

The lid 14 is first in the closed position removably resting on the tank 12.

Afterwards, the lid 14 is raised above the mouth 12 so as to align the notches 22, 22' with the respective opposed side walls 13a and 13b of the tank 12.

The lid 14 is lowered and the notches 22 and 22' removably engage, substantially straddling, on the opposed side walls 13a, 13b, so as to obtain the two fulcrum points P and P'.

In that position, as previously disclosed, the portion 23 of the edge 15 is inside the tank 12.

The lid 14 then slides on the edge of the side walls 13a and 13b, towards the back side wall 13d until the back side 14d of the lid 14 abuts thereagainst.

This operation allows a removable connection to be made between the lid 14 and the tank 12.

In such a removable-connection condition, the lid 14 is angularly moved around the back side 14d, levering on the fulcrum points P and P'.

Once the lid 14 is open, the rod 31 is removed from the support 40 and it is rotated in the operating position. The fork-shaped end 35 engages on the upper edge of the front side wall 13c.

According to the invention, if the lid 14 must be removed from the tank 12, the fork-shaped end 35 is removed from the upper edge of the front side wall 13c, and the rod 31 is positioned once again on the support 40.

The lid 14 can be removed from the tank 12, since it is structurally independent from the tank.

The main advantage of the present invention is that during the angular movement the lid is connected to the tank by means of the fulcrum points. Thanks to the presence of the fulcrum, the lid can be raised without being removed from the tank, avoiding undesired drips of the lid outside the tank.

To this purpose it must be noted that possible drops on the lid inner side, when the latter is open, percolate towards the back edge portion 23 and they flow inside the tank 12, without risking to percolate outwards.

Moreover, thanks to the lid stable position on the tank, the risk of accidental falls of the lid 14 caused by an occasional positioning of the lid 14 on makeshift supports is avoided.

Another advantage of the invention is that the lid is structurally independent from the tank; for this reason, the lid can be removed from the tank without having to remove any constraint.

Another advantage of the aquarium according to the invention is that the lid simply rests on the tank and it is devoid of additional components, such as hinges, pins, joints or the like to articulate the lid to the tank. This allows the costs for these components, as well as for the maintenance thereof, to be reduced.

This device is particularly advantageous considering the fact that the aquarium environment is particularly humid and it can easily make these components go rusty, or cause limestone formation, worsening the operation thereof.

A further advantage of the aquarium being shown is that to obtain the lid angular movement, the aquarium comprises two notches. The manufacturing of these notches has a minimum cost and it does not require any aquarium structural change.

In a preferred solution, the lid is made of plastic, and the tank in glass. When the notches are made only on the lid edge, the tank glass must advantageously not be cut or worked to make the notches.

To this purpose it must be noted that the tank is shaped as a common glass tank. For this reason, in order to obtain the aquarium according to the invention, a tank commonly available on the market can be used.

Obviously a skilled in the art, in order to meet contingent requirements and specifications can bring several changes and variations to the above-described aquarium, all however comprised in the scope of protection of the invention as defined by the following claims.

## Claims

1. Aquarium of the type comprising a tank (12) with mouth (12a) and a lid (14) wherein the lid (14) is movable around a side thereof (14d) between an opening position and a closing position of the mouth (12a) of the tank (12), **characterised in that**
- in the closing position, the lid (14) is structurally independent from the tank,
- in the movement towards the opening position, said side (14d) of the lid (14) has fulcrum on at least two points (P, P') of the tank (12), and **in that** stopping means (30) are provided to keep the lid (14) in said opening position.

2. Aquarium according to claim 1, **characterised in that** the two points (P, P') are positioned on opposed sides (13a, 13b) of the mouth (12a) of the tank (12).

3. Aquarium according to claim 2, **characterised in that** it comprises, in correspondence with the two fulcrum points (P, P'), two notches (22, 22'), or recesses.

4. Aquarium according to claim 3, **characterised in that** the notches (22, 22') are made on the lid (14) and **in that** these notches (22, 22'), during the angular movement, removably engages on the opposed sides (13a, 13b) of the mouth (12a) of the tank (12).

5. Aquarium according to claim 3, **characterised in that** the notches (22a'), or recesses, are made on the opposed sides (13a, 13b) of the mouth (12a) of the tank (12).

6. Aquarium according to claims 4 and 5, **characterised in that** the notches (22, 22', 22a') are made both on the opposed sides (13a, 13b) of the mouth (12a) of the tank (12) and on the lid (14).

7. Aquarium according to claim 4, wherein the lid (14) is of the box-like type peripherally provided with an edge (15), **characterised in that** the notches (22, 22') are made on the edge (15) of the lid (14).

8. Aquarium according to claim 7, **characterised in that** the edge (15) comprises a portion (23) comprised between the two notches (22, 22'), which, during the angular movement, is positioned inside the mouth (12a) of the tank (12).

9. Aquarium according to claim 1, **characterised in that** the stopping means comprise an arm (30) which is movable between a rest position corresponding to the closing position and an operating position corresponding to the opening position, wherein the arm (30) supports the lid (14) above the tank (12).

10. Aquarium according to claim 9, **characterised in that** the arm (30) comprises a rod (31) having a first end (32) having the shape of an open ring (33) and suitable to be connected to the lid (14), and a second end (34), opposed to the first one, being fork-shaped (35) and suitable to engage on one side (13c) of the mouth (12a) of the tank (12).

11. Aquarium according to claim 10, **characterised in that** it comprises a pin (37) made on an inner side of the lid (14) turned towards the tank (12) whereon the open ring (33) of the arm (10) is intended to be hooked.

12. Aquarium according to claim 11, **characterised in that** the pin (37) has an axis being oriented so as to allow the arm (30) to rotate between the operating position and the rest position, wherein the arm (30) is closed foldaway on the inner side of the lid (14).

13. Aquarium according to claim 12, **characterised in that** it comprises a support (40) positioned on the inner side of the lid (14) turned towards the tank (12) and being substantially U-shaped, wherein the arm (30) is suitable to be inserted by pressure in the rest position.
